# FASCICULE DE BREVET EUROPEEN

(11) **EP 2 796 759 B1**
(45) Date de publication et mention de la délivrance du brevet: **17.08.2016**
(21) Numéro de dépôt: 14165024.2
(22) Date de dépôt: 16.04.2014
(51) Int. Cl.: F16L 37/091

(54) **Dispositif de raccordement d'un tube et procédé de fabrication.**
Verbindungselement für Rohrleitungen und Herstellungsverfahren.
Tube connecting element and manufacturing method.

(30) Priorité: 23.04.2013 FR 1353690
(43) Date de publication de la demande: 29.10.2014
(73) Titulaire: Parker Hannifin Manufacturing France SAS, 74112 Annemasse (FR)
(72) Inventeur: Le Quere, Philippe, 35830 Betton (FR); Guillard, Philippe, 35760 Saint-Gregoire (FR)
(74) Mandataire: Lavialle, Bruno François Stéphane

(56) Documents cités:
- DE-U1- 29 701 182
- FR-A1- 2 893 380
- FR-A1- 2 958 713
- US-A- 4 586 734

## Description

La présente invention concerne un dispositif de raccordement d'un tube à un élément de circuit de transport de fluide, tel qu'un élément émetteur ou récepteur de fluide comme une pompe, un distributeur, un actionneur, un réservoir, un régulateur de débit ou de pression... L'invention a également pour objets un procédé de fabrication d'un tel dispositif.

### ARRIERE PLAN DE L'INVENTION

On connaît des dispositifs de raccordement de type cartouche destinés à être engagés dans un canal d'un élément de circuit pour raccorder un tube ou canalisation audit canal de l'élément de circuit. Un tel dispositif comporte un corps tubulaire pourvu intérieurement de moyens d'accrochage du tube et pourvu extérieurement de moyens d'ancrage comportant des dents élastiquement déformables inclinées pour s'opposer à une extraction de la cartouche hors de son logement. Des joints d'étanchéité sont par ailleurs fixés sur le corps de la cartouche de manière à assurer l'étanchéité du raccordement une fois la cartouche insérée dans le canal de l'élément de circuit et un tube engagé dans le dispositif.

La rondelle d'ancrage est généralement retenue entre deux parties du corps engagées l'une dans l'autre. Cette solution est relativement contraignante en ce qui concerne l'assemblage du corps.

Il est également connu d'engager la rondelle d'ancrage à force sur le corps du dispositif, ledit corps étant élastiquement déformable de manière suffisante pour permettre le passe de la rondelle d'ancrage jusqu'à une gorge lui servant de logement. Les opérations de montage et l'outillage nécessaire à celle-ci augmentent le coût de fabrication du dispositif.

Le document FR-A-2893380 décrit un dispositif de ce type avec une rondelle de forme relativement complexe.

Dans un autre type de dispositif de raccordement, le corps est moulé sur la rondelle d'ancrage qui se retrouve alors quasiment totalement noyée, seules l'extrémité libre de ces dents dépassant. Cette structure est avantageuse du point de vue de la fabrication du dispositif. En revanche, la mise en place du dispositif dans le puits de l'élément qu'il est destiné à équipé demande des efforts importants compte-tenu de la faible latitude de déformation des dents. En outre, cette structure engendre des contraintes localisées importantes qui peuvent conduire à une détérioration du dispositif et/ou de l'élément dans lequel le dispositif est implanté.

Le document DE-29701182 décrit un dispositif de raccordement du type précité.

### OBJET DE L'INVENTION

Le but de l'invention est donc de proposer un dispositif de raccordement d'un tube à un élément de circuit, qui présente une structure simple et qui permette une fabrication et une mise en place facilitées.

### BREVE DESCRIPTION DE L'INVENTION

A cet effet, on prévoit, selon l'invention, un dispositif de raccordement d'un tube à un élément de circuit, comprenant un corps tubulaire de type cartouche pourvu extérieurement d'une rondelle d'ancrage du corps dans un puits de l'élément de circuit et pourvu intérieurement de moyens de retenue du tube. La rondelle d'ancrage comprend des dents en saillie vers l'extérieur, les dents étant reliées deux à deux par une portion circonférentielle plate qui est élastiquement déformable en torsion pour permettre un déplacement des dents entre un état de libre passage du corps dans le puits et un état d'ancrage du corps dans le puits. La rondelle d'ancrage comporte des reliefs de son maintien sur le corps, les reliefs s'étendant à partir de dents et en saillie vers l'intérieur par rapport aux dents et aux portions circonférentielles. Les reliefs sont noyés dans le corps et les portions circonférentielles sont suffisamment dégagées du corps pour laisser libre le déplacement des dents entre leurs deux états.

La tenue de la rondelle d'ancrage sur le corps du dispositif est assurée notamment par les reliefs de maintien qui sont noyés dans le corps. Cet agencement autorise une fabrication par surmoulage. Les portions circonférentielles plates de la rondelle n'étant pas noyées dans le corps, les portions circonférentielles sont libres de se déformer en torsion pour permettre le déplacement des dents entre leurs deux états.

Pour augmenter la résistance de la tenue, il est possible de prévoir que :
- la rondelle d'ancrage comprenne un relief de maintien en regard de chaque dent ; et/ou
- le corps tubulaire comporte un épaulement annulaire externe offrant une surface d'appui à la rondelle d'ancrage d'un côté de la rondelle d'ancrage opposé à l'ouverture du puits et ayant une circonférence externe en retrait d'une circonférence externe de la rondelle.

Avantageusement, le corps tubulaire reçoit un organe de déconnexion coulissant coopérant avec les moyens de retenue pour amener les moyens de retenue dans un état de libération du tube et l'organe de déconnexion comprend une collerette qui a un diamètre externe sensiblement égal à un diamètre de la rondelle d'ancrage dans son état d'ancrage et qui est positionnée de manière à sensiblement obturer le puits de l'élément de circuit.

La collerette a deux fonctions : empêcher que des salissures ne viennent s'accumuler dans le puits et prendre appui contre la paroi du puits. L'appui de la collerette contre la paroi du puits pour guider le poussoir dans le puits et guider le tube à connecter dans le dispositif. De plus, la collerette prend appui contre le corps du dispositif lors de la mise en place du dispositif dans le puits, ce qui facilite ladite mise en place.

L'invention a également pour objet un procédé de fabrication d'un dispositif du type ci-dessus. Le procédé comprend les étapes de disposer la rondelle d'ancrage dans un moule et d'injecter un matériau thermoplastique dans le moule pour former le corps du dispositif de telle manière que seuls les reliefs de la rondelle d'ancrage soient noyés dans le corps.

### BREVE DESCRIPTION DES DESSINS

D'autres caractéristiques et avantages de l'invention apparaîtront à la lecture de la description qui suit d'un mode de réalisation particulier de l'invention en relation avec les figures ci-jointes parmi lesquelles :

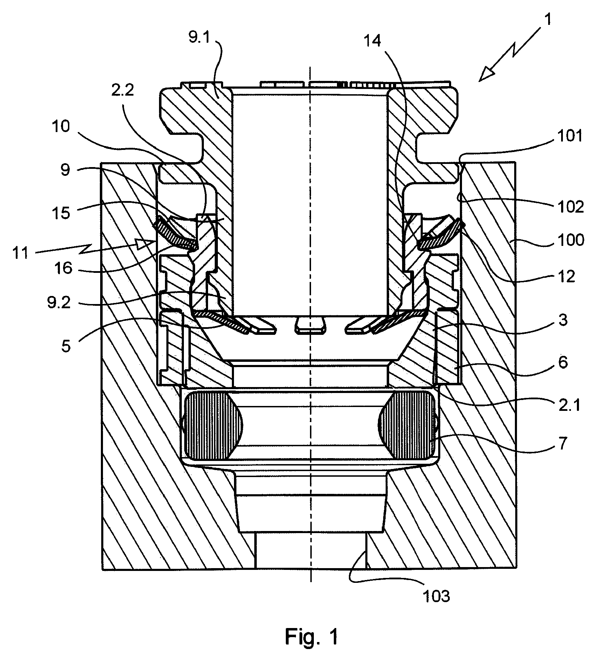

- la figure 1 est une vue en coupe du dispositif après son insertion dans un puits ;

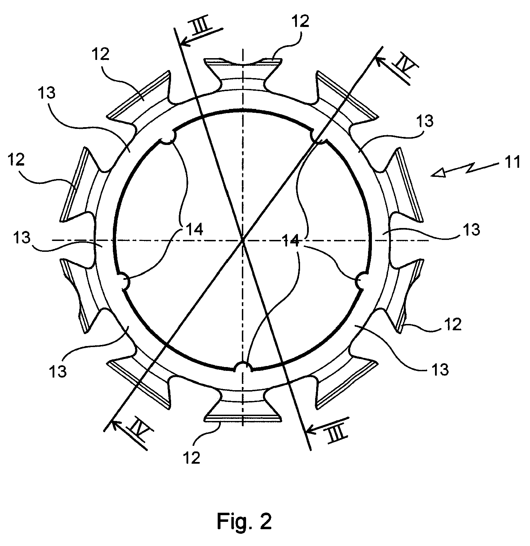

- la figure 2 est une vue de dessus de la rondelle d'ancrage du dispositif selon l'invention ;

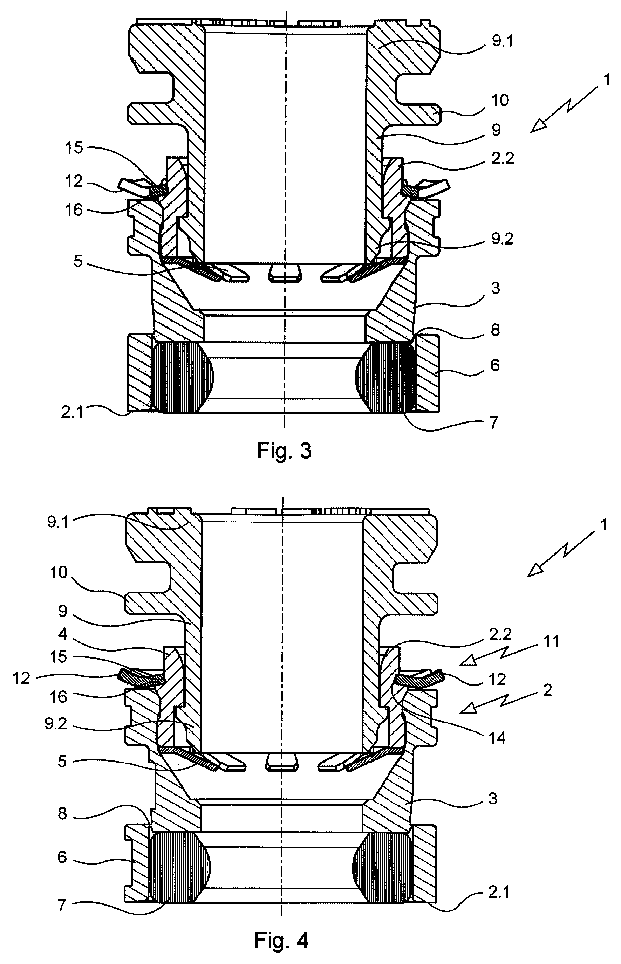

- la figure 3 est une vues en coupe selon un plan de la rondelle identifié en III-III sur la figure 2 ;
- la figure 4 est une vues en coupe selon un plan de la rondelle identifié en IV-IV sur la figure 2.

### DESCRIPTION DETAILLEE DE L'INVENTION

Sur les figures est représenté un dispositif de raccordement, généralement désigné en 1, de type cartouche destiné à être inséré par une ouverture 101 dans un puits 102 d'un élément de circuit 100. Le puits 102 est en communication avec un canal 103 de l'élément de circuit auquel doit être raccordé un tube (non représenté) une fois le tube engagé dans le dispositif de raccordement.

Le dispositif de raccordement 1 comprend un corps généralement désigné en 2, de forme tubulaire, ayant une première extrémité 2.1 par laquelle le corps 2 est destiné à être engagé dans le puits 102 et une deuxième extrémité 2.2 destinée à s'étendre au voisinage de l'ouverture 101 lorsque le dispositif est dans le puits 102.

Plus précisément, le corps 2 comprend, de manière connue en elle-même, deux parties, à savoir : du côté de l'extrémité 2.1, une douille porte-joint 3 et, du côté de l'extrémité 2.2, un insert 4 dont une extrémité est engagée à force dans la douille porte-joint 3.

La douille porte-joint 3 et l'insert 4 définissent entre eux une gorge interne de réception d'une rondelle intérieurement dentée 5 formant un moyen de retenue instantanée du tube dans le corps 2.

A l'opposé de l'insert 4, la douille porte-joint 3 a une extrémité formée d'une bague 6 qui reçoit un joint annulaire d'étanchéité 7 et qui est reliée au reste de la douille porte-joint 3 par un voile sécable 8. Ainsi, lors de l'insertion du dispositif dans le puits 102, la bague 6 vient en butée contre un épaulement du puits 102, provoquant la rupture du voile sécable 8 et le glissement de la bague 6 sur le reste de la douille porte-joint 3. Le joint annulaire d'étanchéité 7 se trouve alors poussé par la douille porte-joint 3 directement dans le puits 102.

Avantageusement ici, l'insert 4 est pourvu, de façon connue en elle-même, d'un organe de déconnexion du tube permettant d'agir sur la rondelle intérieurement dentée 5. L'organe de déconnexion est ici un poussoir 9, de forme tubulaire, qui est reçu à coulissement dans l'insert 4 à l'opposé de la douille porte-joint 3. Le poussoir 9 a une extrémité de manoeuvre 9.1 s'étendant à l'extérieur de l'insert 4 et un nez 9.2 qui s'étend au voisinage de la rondelle intérieurement dentée 5 et qui est agencé pour soulever les dents de ladite rondelle intérieurement dentée 5 lorsque le poussoir 9 est enfoncé dans le corps 2. Le poussoir 9 et l'insert 4 sont pourvus de butées complémentaires disposées en regard l'une de l'autre pour s'opposer au retrait du poussoir 9 hors de l'insert 4. Le poussoir 9 comprend, du côté de son extrémité de manoeuvre 9.1, une collerette 10 qui s'étend en saillie de l'insert 4. La collerette 10 a un diamètre externe voisin du diamètre du puits 102 et est positionnée de manière à sensiblement obturer le puits 102 de l'élément de circuit 100.

Le corps 1 est pourvu extérieurement d'une rondelle d'ancrage généralement désignée en 11.

La rondelle d'ancrage 11 comprend des dents 12 qui s'étendent en saillie vers l'extérieur et qui sont reliées deux à deux par des portions circonférentielles 13. Les portions circonférentielles 13 sont des tronçons d'anneau plat qui délimitent, avec les dents 12, le pourtour annulaire interne de la rondelle d'ancrage 11. Lesdits tronçon d'anneau plat sont déformables élastiquement en torsion pour permettre un déplacement des dents 12 entre un état de libre passage, correspondant à l'état déformé des portions circonférentielles 13, dans lequel les dents 12 définissent un diamètre externe inférieur au diamètre du puits 102 de manière à permettre l'introduction du dispositif 1 dans le puits 102 et un état d'ancrage, correspondant à l'état de repos des portions circonférentielles 13, dans lequel les dents 12 définissent un diamètre externe supérieur au diamètre du puits 102 de manière à mordre dans la paroi du puits 102 pour y ancrer le corps 2 du dispositif 1. Les portions circonférentielles 13 ont ici une section transversale rectangulaire avec un grand axe s'étendant selon une direction sensiblement perpendiculaire à l'axe central de la rondelle d'ancrage 11. Les dents 12 sont inclinées par rapport à un axe central de la rondelle d'ancrage 11 de telle manière que l'extrémité libre des dents 12 soit orientée vers l'extrémité 2.2 du corps 2. Les dents 12 sont relativement rigides, c'est-à-dire que lorsqu'un effort est exercé sur l'extrémité libre d'une des dents 12, la dent 12 transmet cet effort aux portions circonférentielles 13 qui la relient aux dents 12 voisines et qui vont se déformer en torsion sous cet effort.

La rondelle d'ancrage 11 est disposée du côté de l'extrémité 2.2 du corps 2, sur l'insert 4. La rondelle d'ancrage 11 comporte des reliefs 14 de son maintien sur le corps 2. Les reliefs 14 s'étendent à partir de dents 12 en saillie vers l'intérieur par rapport aux dents 12 et aux portions circonférentielles 13. Les reliefs 14 sont noyés dans l'insert 4 et les portions circonférentielles 13 sont suffisamment dégagées du corps pour laisser libre le déplacement des dents entre leurs deux états. Les reliefs 14 sont ici au nombre de cinq symétriquement disposés.

L'insert 4 est pourvu extérieurement d'une gorge de réception 15 de la rondelle d'ancrage 11. Cette gorge 15 est très peu profonde et n'est délimitée latéralement que par un flanc 16 s'étendant du côté de la rondelle d'ancrage 11 opposé à l'extrémité 2.2 du corps 2. Le flanc 16 est formé d'un léger rebord qui a ici une hauteur inférieure à la largeur des portions circonférentielles 13. En outre, la douille porte-joint 3 a son extrémité, opposée à la bague 6, qui vient former un épaulement prolongeant le flanc 16 sur une hauteur suffisante pour constituer une butée à l'arrachement de la rondelle d'ancrage 11.

Le procédé de fabrication du dispositif conforme à l'invention comprend les étapes de disposer la rondelle d'ancrage 11 dans un moule et d'injecter un matériau thermoplastique dans le moule pour former l'insert 4 de telle manière que seuls les reliefs 14 de la rondelle d'ancrage 11 soient noyés dans l'insert 4. La rondelle d'ancrage 11 va ainsi former le fond de la gorge 15 et le flanc 16. Les portions circonférentielles 13 ont ainsi leur circonférence intérieure et l'une de leurs faces qui sont au voisinage immédiat, voire au contact, de parties de surface extérieure du corps (à savoir le fond de la gorge 15 et le flanc 16). Les portions circonférentielles 13 ont donc leur circonférence extérieure et l'une de leurs faces qui ne sont au contact d'aucune partie de surface extérieure du corps. Ceci permet de laisser les portions circonférentielles 13 libres de se déformer.

Les autres opérations de fabrication du dispositif 1 sont classiques.

Le montage du dispositif 1 dans le puits 2 est réalisé de manière classique. L'inclinaison des dents 12 et les reliefs 14 qui maintiennent une circonférence interne des portions circonférentielles 13 en regard d'une portion annulaire de surface extérieure du corps en laissant libre la déformation des dents entre leurs deux états facilitent la torsion des portions circonférentielles 13. Une fois le dispositif 1 inséré, les dents 12 sont ancrées dans la paroi 15 du puits 2.

On notera que le positionnement de la rondelle d'ancrage 11 à l'extrémité 2.2 du corps 2 permet de limiter le frottement des dents 12 sur la paroi du puits 102 lors de l'insertion du dispositif 1 dans le puits 102.

Le tube est raccordé de façon classique au dispositif 1 et une déconnexion du tube est possible par enfoncement du poussoir 9.

Bien entendu, l'invention n'est pas limitée au mode de réalisation décrit ci-dessus et est susceptible de variantes qui apparaîtront à l'homme de métier sans sortir du cadre de l'invention tel que défini par les revendications.

En particulier, bien que le corps soit représenté sous la forme d'une douille 3 prolongée par un insert 4, le corps peut être réalisé d'un seul tenant.

Bien que les moyens de retenue décrits comprennent une rondelle d'accrochage, d'autres moyens de retenue sont envisageables, comme une pince pourvue de bras élastiquement déformable ou un verrou mobile radialement.

Dans le mode de réalisation décrit, les portions circonférentielles 13 ont leur circonférence extérieure et l'une de leur face qui ne sont en appui d'aucune partie de surface extérieure du corps. Il est possible de prévoir que les portions circonférentielles 13 aient leur circonférence extérieure et leurs deux faces qui ne soient en appui d'aucune partie de surface extérieure du corps.

En variante, le flanc 16 peut être formé d'un rebord ayant un diamètre externe sensiblement égal au diamètre du puits, la surface extérieure de l'insert prolongeant celle de la douille porte-joint.

## Revendications

1. Dispositif de raccordement d'un tube à un élément de circuit (100), comprenant un corps tubulaire (2) de type cartouche pourvu extérieurement d'une rondelle d'ancrage (11) du corps dans un puits (102) de l'élément de circuit et pourvu intérieurement de moyens de retenue (5) du tube, la rondelle d'ancrage comprenant des dents (12) en saillie vers l'extérieur, les dents étant reliées deux à deux par une portion circonférentielle plate (13) qui est élastiquement déformable en torsion pour permettre un déplacement des dents entre un état de libre passage du corps dans le puits et un état d'ancrage du corps dans le puits, **caractérisé en ce que** la rondelle d'ancrage comporte des reliefs (14) de son maintien sur le corps, les reliefs s'étendant à partir de dents et en saillie vers l'intérieur par rapport aux dents et aux portions circonférentielles, et **en ce que** les reliefs sont noyés dans le corps et les portions circonférentielles sont suffisamment dégagées du corps pour laisser libre le déplacement des dents entre leurs deux états.

2. Dispositif selon la revendication 1, dans lequel la rondelle d'ancrage (11) comprend des reliefs de maintien (14) symétriquement disposés les uns par rapport aux autres.

3. Dispositif selon la revendication 1, dans lequel la rondelle d'ancrage (11) est montée sur une portion d'extrémité (2.2) du corps (2) destinée à s'étendre au voisinage de l'ouverture (101) du puits (102) lorsque le dispositif de raccordement est en service.

4. Dispositif selon la revendication 1, dans lequel le corps (2) reçoit un organe de déconnexion (9) coulissant coopérant avec les moyens de retenue (5) pour amener les moyens de retenue dans un état de libération du tube.

5. Dispositif selon la revendication 4, dans lequel l'organe de déconnexion (9) comprend une collerette (10) qui a un diamètre externe sensiblement égal à un diamètre de la rondelle d'ancrage (11) dans son état d'ancrage et qui est positionnée de manière à sensiblement obturer le puits (102) de l'élément de circuit (100).

6. Dispositif selon la revendication 1, dans lequel le corps (2) comprend une douille (3) pourvue d'un élément d'étanchéité (7), les moyens de retenue comprenant une rondelle d'accrochage (5) prisonnière dans un logement délimité par la douille et un insert (4).

7. Dispositif selon l'une des revendications précédentes, dans lequel le corps (2) comporte un épaulement annulaire externe offrant une surface d'appui à la rondelle d'ancrage (11) d'un côté de la rondelle opposé à l'ouverture (101) du puits (102) et ayant une circonférence externe en retrait d'une circonférence externe de la rondelle d'ancrage (11).

8. Procédé de fabrication d'un dispositif conforme à l'une quelconque des revendications précédentes, comprenant les étapes de disposer la rondelle d'ancrage (11) dans un moule et d'injecter un matériau thermoplastique dans le moule pour former le corps (2) du dispositif de telle manière que seuls les reliefs (14) de la rondelle d'ancrage soient noyés dans le corps.

## Patentansprüche

1. Verbindungsvorrichtung zur Verbindung eines Rohres mit einem Kreislaufelement (100), umfassend ein rohrförmiges Gehäuse (2) nach Art einer Kartusche, das außen mit einer Verankerungsringscheibe (11) zur Verankerung des Gehäuses in einer Bohrung (102) des Kreislaufelements und innen mit Rückhaltemitteln (5) zum Zurückhalten des Rohres versehen ist, wobei die Verankerungsringscheibe nach außen vorstehende Zähne (12) umfasst, wobei die Zähne paarweise über einen ebenen Umfangsabschnitt (13) verbunden sind, der elastisch torsionsverformbar ist, um eine Bewegung der Zähne zwischen einem Zustand des freien Durchtritts des Gehäuses in der Bohrung und einem Zustand der Verankerung des Gehäuses in der Bohrung zu gestatten, **dadurch gekennzeichnet, dass** die Verankerungsringscheibe Reliefelemente (14) für ihren Halt am Gehäuse umfasst, wobei sich die Reliefelemente ab den Zähnen und relativ zu den Zähnen und den Umfangsabschnitten nach innen vorstehend erstrecken, und dass die Reliefelemente in das Gehäuse eingebettet sind und die Umfangsabschnitte ausreichend vom Gehäuses gelöst sind, um die Bewegung der Zähne zwischen ihren beiden Zuständen zuzulassen.

2. Vorrichtung nach Anspruch 1, wobei die Verankerungsringscheibe (11) Haltereliefelemente (14) umfasst, die zueinander symmetrisch angeordnet sind.

3. Vorrichtung nach Anspruch 1, wobei die Verankerungsringscheibe (11) an einem Endabschnitt (2.2) des Gehäuses (2) angebracht ist, der dazu bestimmt ist, sich nahe der Öffnung (101) der Bohrung (102) zu erstrecken, wenn die Verbindungsvorrichtung im Gebrauch ist.

4. Vorrichtung nach Anspruch 1, wobei das Gehäuse (2) ein verschiebbares Trennorgan (9) aufnimmt, das mit den Rückhaltemitteln (5) zusammenwirkt, um die Rückhaltemittel in einen Freigabezustand zur Freigabe des Rohres zu bringen.

5. Vorrichtung nach Anspruch 4, wobei das Trennelement (9) einen Kragen (10) umfasst, der einen Außendurchmesser hat, der im Wesentlichen gleich einem Durchmesser der Verankerungsringscheibe (11) in ihrem Verankerungszustand ist, und der so positioniert ist, das er die Bohrung (102) des Kreislaufelements (100) im Wesentlichen verschließt.

6. Vorrichtung nach Anspruch 1, wobei das Gehäuse (2) eine Hülse (3) umfasst, die mit einem Dichtungselement (7) versehen ist, wobei die Rückhaltemittel eine Ringscheibe (5) zum Festhalten umfassen, die in einer Aufnahme gefangen ist, die von der Hülse und einem Einsatzteil (4) begrenzt ist.

7. Vorrichtung nach einem der vorhergehenden Ansprüche, wobei das Gehäuse (2) eine äußere ringförmige Schulter umfasst, die eine Auflagefläche für die Verankerungsringscheibe (11) auf einer Seite der Ringscheibe bietet, die der Öffnung (101) der Bohrung (102) abgewandt ist, und einen Außenumfang hat, der von einem Außenumfang der Verankerungsringscheibe (11) zurückgesetzt ist.

8. Verfahren zur Herstellung einer Vorrichtung gemäß einem der vorhergehenden Ansprüche, umfassend die Schritte des Anordnens der Verankerungsringscheibe (11) in einer Form und des Einspritzens eines thermoplastischen Materials in die Form, um das Gehäuse (2) der Vorrichtung derart zu formen, dass nur die Reliefelemente (14) der Verankerungsringscheibe in das Gehäuse eingebettet sind.

## Claims

1. A device for connecting a tube to a circuit element (100), the device comprising a tubular body (2) of cartridge type provided externally with an anchor washer (11) for anchoring the body in a well (102) of the circuit element, and provided internally with retaining means (5) for retaining the tube, the anchor washer having outwardly projecting teeth (12), the teeth being connected together in pairs by respective flat circumferential portions (13) that are elastically deformable in twisting to enable the teeth to move between a state for allowing the body to pass freely in the well and a state for anchoring the body in the well, the device being **characterized in that** the anchor washer has holder portions in relief (14) for holding it on the body, the portions in relief extending from teeth and projecting towards the inside relative to the teeth and to the circumferential portions, and **in that** the portions in relief are embedded in the body and the circumferential portions are sufficiently separated from the body to leave the teeth free to move between their two states.

2. A device according to claim 1, wherein the anchor washer (11) includes holder portions in relief (14) that are arranged symmetrically relative to one another.

3. A device according to claim 1, wherein the anchor washer (11) is mounted on an end portion (2.2) of the body (2) that is to extend in the vicinity of the opening (101) of the well (102) when the connection device is in service.

4. A device according to claim 1, wherein the body (2) receives a slidable disconnection member (9) co-operating with the retaining means (5) for bringing the retaining means into a state for releasing the tube.

5. A device according to claim 4, wherein the disconnection member (9) includes a collar (10) that has an outside diameter substantially equal to the diameter of the anchor washer (11) in its anchoring state and that is positioned in such a manner as to substantially close the well (102) of the circuit element (100).

6. A device according to claim 1, wherein the body (2) includes a bushing (3) with a sealing element (7), the retaining means comprising a grip ring (5) held captive in a housing defined by the bushing and an insert (4).

7. A device according to any preceding claim, wherein the body (2) includes an outer annular shoulder providing a bearing surface for the anchor washer (11) on a side of the washer remote from the opening (101) of the well (102) and having an outer circumference set back from an outer circumference of the anchor washer (11).

8. A method of fabricating a device according to any preceding claim, the method comprising the steps of placing the anchor washer (11) in a mold and of injecting a thermoplastic material into the mold in order to form the body (2) of the device in such a manner that only the portions in relief (14) of the anchor washer are embedded in the body.
